# EUROPÄISCHE PATENTSCHRIFT

(11) **EP 3 018 378 B1**
(45) Veröffentlichungstag und Bekanntmachung des Hinweises auf die Patenterteilung: **06.12.2017**
(21) Anmeldenummer: 15188300.6
(22) Anmeldetag: 05.10.2015
(51) Int. Cl.: F16D 13/54, F16D 43/12

(54) **REIBSCHEIBENKUPPLUNG**
FRICTION DISC CLUTCH
EMBRAYAGE PAR DISQUES DE FRICTION

(30) Priorität: 06.11.2014 DE 102014222663
(43) Veröffentlichungstag der Anmeldung: 11.05.2016
(73) Patentinhaber: ZF Friedrichshafen AG, 88046 Friedrichshafen (DE)
(72) Erfinder: Wittholz, Jan, 97506 Grafenrheinfeld (DE)

(56) Entgegenhaltungen:
- DE-A1-102007 035 427
- DE-C- 649 800
- US-A1- 2006 260 904

## Beschreibung

Die Bedienung einer Kupplung eines Kraftfahrzeugs wird von vielen Fahrern als Belastung, zumindest jedoch als lästig empfunden. Insbesondere bei einem Anfahren, bei dem bei einer konventionellen Trockenkupplung der Schleifpunkt der Kupplung kurzfristig gehalten werden muss, hat bei Fahrern immer wieder das Bedürfnis geweckt, die Bedienung der Kupplung automatisiert erfolgen zu lassen. Gerade in diesem Bereich wurden daher bereits in den 50er-Jahren des letzten Jahrhunderts Fliehkraftkupplungen eingesetzt. So wurde beispielsweise im sogenannten "Saxomat" eine zusätzliche Fliehkraftkupplung eingesetzt, bei der wälzgelagerte Fliehgewichte auf Rampen abrollen und so eine Unterbrechung des Kraftflusses zwischen Motor und Getriebe während des Stillstands des Kraftfahrzeugs ermöglicht haben.

Weiter sind Lamellen-Fliehkraftkupplungen bekannt, die eine axiale Anpresskraft mittels Hebeln bewirken, die an einem Hebelarm Fliehgewichte umfassen, um eine Anpresskraft, die von einer Membranfeder kommt, zu unterstützen.

Die DE 10 2007 035 427 A1 bezieht sich so auf eine Lamellen-Fliehkraftkupplung, bei der in einer Gehäuseanordnung angeordnete Hebelelemente mittels Fliehkraft im Betrieb auf eine Anpressplatte eine Schließkraft ausüben, die eine Schließkraft, die durch eine Membranfeder auf die Anpressplatte ausgeübt wird, unterstützen. Die in diesem Dokument beschriebene Lamellen-Fliehkraftkupplung benötigt jedoch immer noch eine Membranfeder, die eine anfängliche Schließkraft auf die Lamellen aufbringt. Dies bedeutet auch, dass diese Lamellen-Fliehkraftkupplung bei nicht Betrieb geschlossen ist, also normally closed.

Andere Kupplungen die eine Fliehkraftanordnung wie in der Anmeldung Beschreiben offenbaren sind aus der US2006/0260904A1 oder DE649800C1 bekannt. Auch diese Kupplungen sind bei nicht Betrieb, wenn die Kupplung nicht betätigt wird, geschlossen, also "normally closed".
Ausgehend hiervon ist es die Aufgabe, eine Fliehkraftkupplung für ein Kraftfahrzeug zu schaffen, welche im nicht Betrieb geöffnet ist, also normally open.
Dies wird gelöst durch eine Fliehkraftkupplung eines Kraftfahrzeugs gemäß Patentanspruch 1.
Gemäß der Erfindung wird diese Aufgabe gelöst durch eine Reibscheibenkupplung, umfassend ein um eine Drehachse A drehbares Gehäuseelement, ein am Gehäuseelement drehfest und axial verschiebbar gelagertes Anpressplattenelement, zumindest ein zum Anpressplattenelement axial gestaffelt angeordnetes und zum Anpressplattenelement relativ verdrehbar angeordnetes Reibscheibenelement, wobei die Reibscheibenkupplung mindestens ein sich im Betrieb der Reibscheibenkupplung mitdrehendes Hebelelement umfasst, das um eine Schwenkachse, die quer zur Drehachse A und quer zu einer Radialrichtung der Reibscheibenkupplung verläuft, schwenkbar ist, und das einen ersten Hebelarmabschnitt und einen zweiten Hebelarmabschnitt aufweist, wobei während des Betriebes an dem zweiten Hebelarmabschnitt wirkende Fliehkraft größer ist als die an dem ersten Hebelarmabschnitt wirkende Fliehkraft, so dass sich aus den Fliehkräften ein resultierendes Drehmoment an dem Hebelelement ergibt und dadurch das erste Hebelelement mit einer Anpresskraft auf das Anpressplattenelement drückt.
Dabei ist das Hebelelement mittels eines Bolzens, vorteilhaft aus Stahl gefertigt, an dem Gehäuseelement, hier vorteilhaft zwischen zwei gelagert. An dem zweiten Hebelarmabschnitt, vorteilhaft an einem Ende des Hebelarmabschnittes, können unterschiedliche Massen, vorteilhaft in Form von beispielsweise Unterlegscheiben mittels einer Schraubverbindung befestigt werden. Durch eine Verwendung von unterschiedlichen Massen an dem zweiten Hebelarmabschnitt kann die wirkende Fliehkraft eingestellt werden und somit ebenfalls die auf die Anpressplatte wirkende Anpresskraft, die von dem ersten Hebelarmabschnitt übertragen wird. Hierdurch kann die Anpresskraft auf eine benötigte Größe abgestimmt werden. Folglich kann auf die unterschiedlichen Ausführungen von Reibscheibenkupplungen, gekennzeichnet durch eine unterschiedliche Anzahl von Reibscheiben oder von unterschiedlichen Reibscheibendurchmessern, vorteilhaft eine benötigte Anpresskraft bei einer bestimmten Drehzahl eingestellt werden. Auch ist dies besonders vorteilhaft, da sich die Masseelemente radial außen an der Reibscheibenkupplung befinden und somit leicht zu erreichen sind, um ein Auswechseln der Masseelemente vorzunehmen.
Das erste Hebelelement drückt dabei in Ausnehmungen der Anpressplatte, die auch als eine Ringnut ausgeführt sein können.

Eine weitere vorteilhafte Ausführungsform sieht vor, dass der zweite Hebelarmabschnitt ein austauschbares Masseelement umfasst. Wie schon vorangehend beschrieben kann durch unterschiedlich schwere Masseelemente die Fliehkraft und damit die Axialkraft auf das Anpressplattenelement unterschiedlich hoch ausgeführt werden. Dies ist besonders vorteilhaft für eine individuelle Abstimmung der Anpresskraft.

Eine weitere günstige Ausgestaltung sieht vor, dass der zweite Hebelarmabschnitt sich zumindest teilweise axial überlappend zu dem Anpressplattenelement befindet. Durch diese Anordnungsform kann die Reibscheibenkupplung axial platzsparend ausgeführt werden. Dies ist besonders vorteilhaft bei Kraftfahrzeugen mit einem Front-Quer-Antriebsstrang, da hier ein axialer Bauraum meist kürzer ausfällt als bei einem Heck-Längs- Antriebsstrang. Durch eine Anordnung des zweiten Hebelarmabschnittes an einem radial äußeren Bereich der Reibscheibenkupplung kann das Masseelement bei einer gleichen Fliehkraft leichter ausgeführt werden, als bei einer Positionierung an einem radial inneren Bereich.

Eine weiter günstige Ausführungsform sieht vor, dass die Reibscheibenkupplung eine Anpressplattenrückstellanordnung umfasst, die mit einer Rückstellkraft auf das Anpressplattenelement drückt, wobei die Rückstellkraft entgegengerichtet zu der Anpresskraft (F1) ist. Dabei umfasst die Anpressplattenrückstellanordnung einen Bolzen mit einem Gewinde. Um den Bolzen wird ein Federelement, vorteilhaft eine Schraubendruckfeder, angeordnet, die sich einerseits an einem Einstellelement, beispielsweise einer Mutter und andererseits an der Anpressplatte abstützt. Dabei ist der Bolzen an einer Seite in einer axialen Richtung zu einem Antriebsaggregat an dem Gehäuseelement gesichert. Durch eine Drehung des Einstellelements kann eine Rückstellkraft oder auch bezeichnet als Vorspannkraft des Federelements geändert werden. Diese Vorspannkraft bewirkt zum einen, dass die Reibscheibenkupplung im Stillstand geöffnet ist, also normally open, da das Federelement mit der Rückstellkraft in einer axialen Richtung zu einem Abtriebsaggregat, beispielsweise einem Getriebe, gegen das Anpressplattenelement drückt und damit keine Anpresskraft auf die Reibscheiben vorhanden ist. Erst wenn eine Fliehkraft an dem Hebelelement eine Anpresskraft auf das Anpressplattenelement ausübt, die größer ist als die gegengerichtete Rückstellkraft von dem Federelement, beginnt die Kupplung zu schließen und ein Drehmoment zu übertragen. Weiter kann mit der Anpressplattenrückstellanordnung auch ein Beginn eingestellt werden, bei dem die Reibscheibenkupplung beginnt Drehmoment zu übertragen. Da die Anpresskraft abhängig von der Fliehkraft ist und die Fliehkraft unter anderem durch eine Drehzahl der Reibscheibenkupplung bestimmt werden kann, kann beispielsweise durch eine Erhöhung der Rückstellkraft der Beginn der Drehmomentübertragung der Reibscheibenkupplung bei einer höheren Drehzahl der Reibscheibenkupplung bestimmt werden. Durch eine Positionierung der Anpressplattenrückstellanordnung an einem radial äußeren Bereich der Reibscheibenkupplung ist das Federelement möglichst weit von den Teilen, wie den Reibscheiben, entfernt, an denen Wärme entstehen kann, die sich nachteilig auf das Federelement auswirken kann.

In einer weiteren vorteilhaften Ausführungsform umfasst die Anpressplattenrückstellanordnung ein Federelement, das sich einerseits mittels eines Bolzenelements an dem Gehäuseelement und andererseits an dem Anpressplattenelement abstützt. Wie bereits voranstehend beschrieben kann dadurch auf das Anpressplattenelement eine Rückstellkraft ausgeübt werden.

Eine weitere günstige Ausgestaltung sieht vor, dass das Bolzenelement an einer Längsseite ein Gewinde umfasst, auf dem mittels eines drehbares Einstellelements das Federelement gegen das Anpressplattenelement und gegen das Gehäuseelement vorgespannt werden kann. Wie bereits beschrieben kann dadurch vorteilhaft eine gewünschte Rückstellkraft, die auf das Anpressplattenelement wirkt, eingestellt werden.

Eine weitere vorteilhafte Ausgestaltung sieht vor, dass das Federelement eine Schraubendruckfeder und / oder ein zumindest ein Tellerfederelement ist. Die Verwendung von Schraubendruckfedern ist eine kostengünstige Ausführungsform und lässt unterschiedliche Federkennlinien zu. Bei der Verwendung von Tellerfedern kann vorteilhaft axialer Bauraum eingespart werden.

Eine weitere günstige Ausführungsform sieht vor, dass die Reibscheibenkupplung ein Ausrückhebelelement umfasst, das um eine Schwenkachse, die quer zur Drehachse A und quer zu einer Radialrichtung der Reibscheibenkupplung verläuft, schwenkbar ist, und das einen ersten Ausrückhebelarmabschnitt und einen zweiten Ausrückhebelarmabschnitt aufweist. Dabei ist das Ausrückhebelelement an einem Lagerring verdrehbar gelagert, wobei der Lagerring verdrehfest mit dem Gehäuseelement, vorteilhaft mittels einer Schraubverbindung, verbunden ist. Dies ist besonders bei der Montage vorteilhaft, da das Ausrückhebelelement zuerst mit dem Lagerring montiert werden kann und erst danach die Einheit Lagerring mit Ausrückhebelelement an das Gehäuse montiert wird. Es ist aber auch möglich, das Ausrückhebelelement direkt an dem Gehäuseelement verdrehbar zu Lagern, vorteilhaft mittels eines Lagerbolzens.

Eine weitere vorteilhafte Ausführungsform sieht vor, dass das Ausrückhebelelement mit einem Ende des ersten Ausrückhebelarmabschnitts in eine Ausnehmung des Anpressplattenelements eingreift. Dabei kann die Ausnehmung als beispielsweise eingefräste Ausnehmung oder als eine eingedrehte umlaufende Nut ausgeführt sein.

Eine zusätzliche günstige Ausgestaltung sieht vor, dass der zweite Ausrückhebelarmabschnitt sich nach radial innen zur Drehachse A erstreckt.

Eine weitere günstige Ausführungsform sieht vor, dass eine Länge des ersten Ausrückhebelarmabschnitts kürzer ist als eine Länge des zweiten Ausrückhebelarmabschnitts. Dies ist besonders vorteilhaft um durch ein Hebelverhältnis eine an dem zweiten Ausrückhebelarmabschnitt eingeleitete Kraft an dem ersten Ausrückhebelarmabschnitt zu verstärken.

Eine weitere günstige Ausführungsform sieht vor, dass eine Ausrückanordnung auf den zweiten Ausrückhebelarmabschnitt mit einer Ausrückkraft wirkt. Dabei handelt es sich bei der Ausrückanordnung um ein bekanntes Ausrücksystem für Reibkupplungen im Fahrzeugbau, die hydraulisch oder pneumatisch oder elektrisch betrieben werden können. Die auf den zweiten Ausrückhebelarmabschnitt wirkende Ausrückkraft wird dabei durch das jeweils vorhandene Hebelverhältnis an dem ersten Ausrückhebelarmabschnitt erhöht, so dass eine höhere Anpresskraft mit der niedrigeren Ausrückkraft überwunden werden kann und somit ein Ausrücken der Kupplung ermöglicht wird. Dies ist besonders vorteilhaft um bei einem Gangwechsel einen Drehmomentfluss von dem Antriebsaggregat zu dem Abtriebsaggregat zu unterbrechen. Weiter kann die Ausrückanordnung auch als eine Sicherheitseinrichtung verwendet werden, die es jederzeit, also im Betrieb und im Stillstand der Reibscheibenkupplung, zulässt eine vorhandene Anpresskraft auf das Anpressplattenelement in axialer Richtung zu den Reibscheibenelementen in entgegengesetzter Richtung zu überwinden und damit jederzeit die Reibscheibenkupplung auskuppeln zu können.

Ausführungsbeispiele werden unter Bezugnahme auf die beiliegenden Figuren näher beschrieben und erläutert.
Fig. 1 zeigt eine Querschnittsdarstellung einer Reibscheibenkupplung mit einem Hebelelement, das unter Fliehkrafteinwirkung eine axiale Kraft auf ein Reibscheibenpaket aufbringt
Fig. 2 zeigt eine Querschnittsdarstellung einer Reibscheibenkupplung wie unter Figur 1 beschrieben, jedoch im Bereich einer Anpressplattenrückstellanordnung.
Fig. 3 zeigt eine Querschnittdarstellung einer Reibscheibenkupplung wie unter Figur 1 beschrieben, jedoch im Bereich eines Lagerrings für ein Ausrückhebelelement.
Fig. 4 zeigt einen Querschnitt einer Draufsicht einer Reibscheibenkupplung wie unter Figur 1 beschrieben.

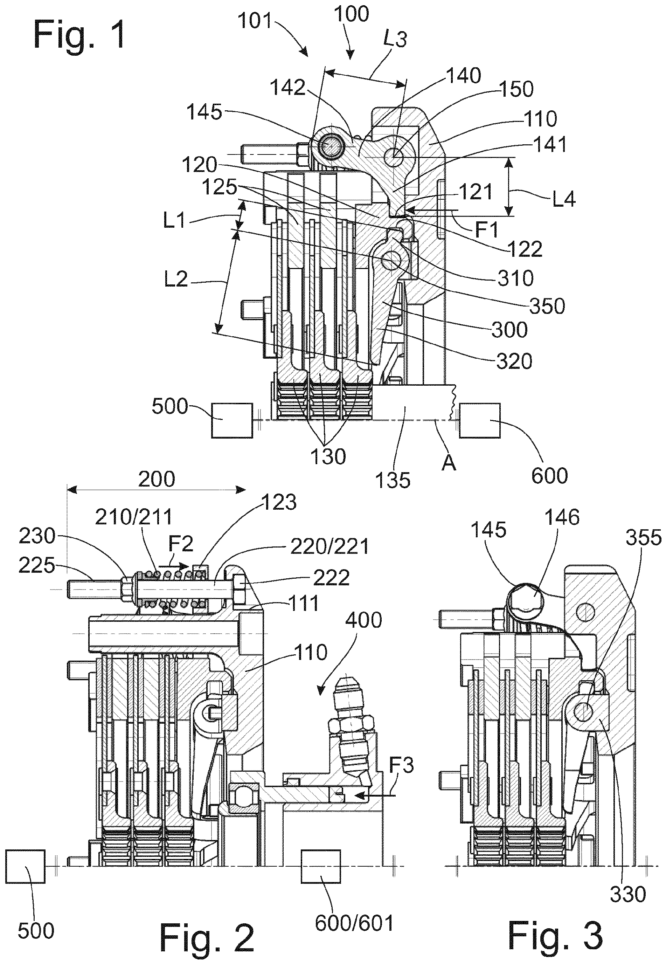

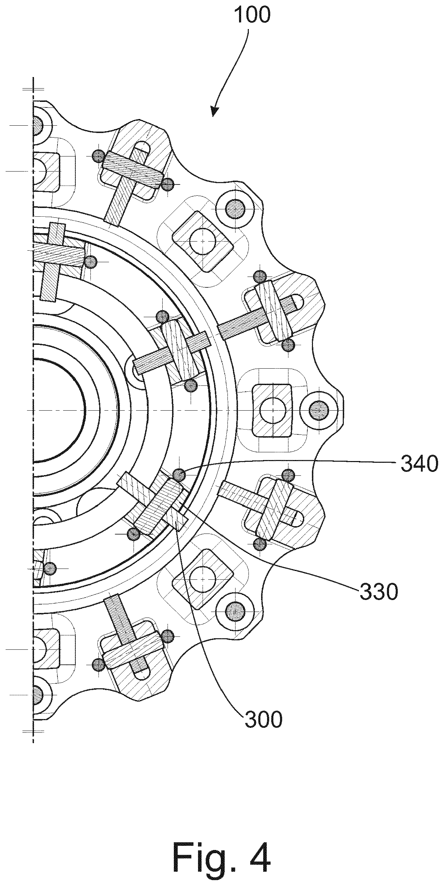

Die Figur 1 zeigt eine Querschnittsdarstellung einer Reibscheibenkupplung 100 mit einem Hebelelement 140, das unter einer Fliehkrafteinwirkung eine axiale Kraft, hier eine Anpresskraft F1 auf ein Reibscheibenpaket, bestehend aus drei Reibscheibenelementen 130 aufbringt. Dabei handelt es sich hier um eine bekannte Gehäusekupplung. Dies bedeutet, dass ein Gehäuseelement 110 mittels, vorteilhaft, einer Schraubverbindung, hier nicht dargestellt, an ein Schwungrad, hier nicht dargestellt, drehfest befestigt wird. Dabei nimmt das Gehäuseelement drehfest und axial verschiebbar ein Anpressplattenelement 120 und zwei Zwischenscheibenelemente 125 auf. Axial gegenüber den Zwischenscheibenelementen125 sind beidseitig die Reibscheibenelemente 130, hier drei an der Zahl, positioniert, wobei die Reibscheibenelemente 130 verdrehbar zu dem Gehäuseelement 110 und dabei drefest zu beispielsweise einer Getriebeeingangswelle 135 sind. Durch die Anpresskraft F1, die über das Hebelelement 140 mittels der Fliehkraft auf das Anpressplattenelement 120 wirkt, wird auf die Reibscheibenelemente 130 und die Zwischenscheibenelemenete 125 ebenfalls eine axiale Kraft aufgebracht und somit eine reibschlüssige Verbindung zwischen den Reibscheibenelementen 130 und den Zwischenscheibenelementen 125 mit dem Anpressplattenelement hergestellt. Hierdurch kann ein Drehmoment, das beispielsweis von einem Antriebsaggregat 500 kommt an ein Abtriebsaggregat 600 übertragen werden. Hervorzuheben ist hier, dass das Hebelelement 140 an dem Gehäuseelement quer zur Drehachse A verdrehbar gelagert ist. Dabei ist der zweite Hebelarmabschnitt, an dem ein Masseelement 145 mittels einer Schraubverbindung 146 befestigt ist in axialer Richtung zu dem Antriebsaggregat 500 gerichtet, so dass sich hier ein kompakter axialer Bauraum ergibt. Durch eine Länge L3 des zweiten Hebelarmabschnittes kann auf die Anpresskraft F1 , die von einem ersten Hebelarmabschnitt 141 auf das Anpressplattenelement 120 wirkt Einfluss genommen werden. Hier gilt das bekannte Hebelarmverhältnis. Weiter kann durch eine verwendung von unterschiedlich schweren Masselementen 145 ebenfalls Einfluss auf die Anpresskraft F1 genommen werden. Ein Ausrückhebelelement 300, das hier verdrehbar und quer zur Drehachse A an einem Lagerring 330 gelagert ist, greift mit einem ersten Ausrückhebelarmabschnitt 310 in eine Ringnut 122 des Anpressplattenelements 120. Dabei ist der Lagerring 330 vorteilhaft mittels einer Schraubverbindung 340, zu sehen in Figur 4, drehfest mit dem Gehäuseelement 110 verbunden. Ein zweiter Ausrückhebelarmabschnitt 320 der nach radial innen zur Drehachse A zeigt wird vorteilhaft von einer Ausrückanordnung 400, zu sehen in Figur 2, mit einer Ausrückkraft beaufschlagt. Durch das Hebelverhältnis kann die Ausrückkraft F 3 folglich an dem ersten Ausrückhebelarmabschnitt 310 vergrößert werden. Für den Fall, dass die zu der Anpresskraft F1 entgegengerichtete Ausrückkraft F3, die durch das Hebelverhältnis hier an dem ersten Ausrückhebelarmabschnitt vergrößert wird, größer ist, als die Anpresskraft F1, kann das Anpressplattenelement 120 in axialer Richtung zu dem Abtriebsaggregat 600 ausgerückt werden. Folglich ist die Drehmomentübertragung von dem Antriebsaggregat 500 zu dem Abtriebsaggregat 600 unterbrochen. Dies ist besonders vorteilhaft, wenn Schaltvorgänge in einem Getriebe, hier nicht dargestellt, durchzuführen sind. Besonders vorzuheben ist, dass diese Ausführung der Reibscheibenkupplung 100 kein Federelement, wie beispielsweise eine Membranfeder, umfasst, welche die Reibscheibenkupplung auch im Nichtbetrieb mit einer axialen Kraft beaufschlagt, was allgemein unter dem Begriff normally closed Kupplung bekannt ist. Hier handelt es sich daher um eine normally open Kupplung. Dies bedeutet, dass im Nietbetrieb die Reibscheibenkupplung kein Drehmoment übertragen kann.

Die Figur 2 zeigt eine Querschnittsdarstellung einer Reibscheibenkupplung 100 wie unter Figur 1 beschrieben, jedoch im Bereich einer Anpressplattenrückstellanordnung 200. Dabei umfasst die Anpressplattenrückstellanordnung 200 ein Bolzenelement 220, das beispielsweise wie eine Schaftschraube 221 ausgeführt ist. Dabei ist die Schaftschraube 221 mittels eines Schraubenkopfes 222 in axialer Richtung zu dem Antriebsaggregat 500 in einer Ausnehmung 111 des Gehäuseelement 110 gesichert. Das andere Ende der Schaftschraube 221 wird in einer Bohrung in dem Schwungrad, beides hier nicht dargestellt, radial geführt, so dass unter einer Fliehkrafteinwirkung die Schaftschraube 221 sich nicht verkanten kann. Zwischen den beiden Lagerstellen ist konzentrisch zu der Schaftschraube 221 ein Federelement 210, hier in Form einer Schraubendruckfeder211 positioniert, das sich einerseits gegen ein Einstellelement 230, das mittels eines Gewindes 225 auf der Schaftschraube 221 durch eine Drehung in axialer Richtung veränderbar ist, abstützt und andererseits gegen einen Vorsprung 123 der Anpressplatte 120. Dies ist besonders vorteilhaft, da durch eine Rückstellkraft F2 des Federelements 210 die Anpressplatte in axialer Richtung zu dem Abtriebsaggregat 600 gedrückt wird. Weiter kann durch ein Vorspannen des Federelements 210 mittels des Einstellelements 230 eine Rückstellkraft F2 verändert werden, was sich auf die entgegengesetzte Anpresskraft F 1 auswirkt. Wenn die Anpresskraft F1 größer als die Rückstellkraft F3 ist, beginnt die Reibscheibenkupplung 100 sich zu schließen. Hierdurch kann eine Karakteristik einer Einkuppelkurve der Reibscheibenkupplung 100 eingestellt werden. Hier nicht dargestellt, kann aber auch eine bekannte Tellerfeder oder eine gestaffelt angeordete Schichtung von tellerfedern verwendet werden.
Weiter ist hier die Ausrückanordnung 400 zu sehen, die bereits unter Figur 1 beschrieben wurde.

Fig. 3 zeigt eine Querschnittdarstellung einer Reibscheibenkupplung 100,wie unter Figur 1 beschrieben, jedoch im Bereich eines Lagerrings 330 für ein Ausrückhebelelement. Weiter ist hier die Schraubverbindung 146 für das Masseelement 145 an dem Hebelelement 140 zu sehen.

Die Figur 4 zeigt einen Querschnitt einer Draufsicht einer Reibscheibenkupplung 100 wie unter Figur 1 beschrieben. Dabei ist die Schraubverbindung 340 des Lagerrings 330 für die Ausrückhebelelemente 300 dargestellt.

### Bezugszeichen

- 100: Reibscheibenkupplung
- 101: Gehäusekupplung
- 110: Gehäuseelement
- 111: Ausnehmung
- 120: Anpressplattenelement
- 121: Ausnehmung
- 122: Ringnut
- 123: Vorsprung
- 125: Zwischenscheibenelement
- 130: Reibscheibenelement
- 135: Getriebeeingangswelle
- 140: Hebelelement
- 141: erster Hebelarmabschnitt
- 142: zweiter Hebelarmabschnitt
- 145: Masseelement
- 146: Schraubverbindung
- 150: Schwenkachse
- 200: Anpressplattenrückstellanordnung
- 210: Federelement
- 211: Schraubendruckfeder
- 220: Bolzenelement
- 221: Schaftschraube
- 222: Schraubenkopf
- 225: Gewinde
- 230: Einstellelement
- 300: Ausrückhebelelement
- 310: erster Ausrückhebelarmabschnitt
- 320: zweiter Ausrückhebelarmabschnitt
- 330: Lagerring
- 340: Schraubverbindung
- 350: Schwenkachse
- 355: Lagerbolzen
- 400: Ausrückanordnung
- 500: Antriebsaggregat
- 600: Abtriebsaggregat
- 601: Getriebe
- A: Drehachse
- F1: Anpresskraft
- F2: Rückstellkraft
- F3: Ausrückkraft
- L1: Länge
- L2: Länge
- L3: Länge
- L4: Länge

## Patentansprüche

1. Reibscheibenkupplung (100), die im nicht Betrieb, wenn die Kupplung nicht betätigt wird, geöffnet ist, also "normally open", umfassend
- ein um eine Drehachse A drehbares Gehäuseelement (110),
- ein am Gehäuseelement (110) drehfest und axial verschiebbar gelagertes Anpressplattenelement (120),
- zumindest ein zum Anpressplattenelement (120) axial gestaffelt angeordnetes und zum Anpressplattenelement (120) relativ verdrehbar angeordnetes Reibscheibenelement (130), **dadurch gekennzeichnet,**
**dass** die Reibscheibenkupplung (100) mindestens ein sich im Betrieb der Reibscheibenkupplung (100) mitdrehendes Hebelelement (140) umfasst, das um eine Schwenkachse (150), die quer zur Drehachse A und quer zu einer Radialrichtung der Reibscheibenkupplung verläuft, schwenkbar ist, und das einen ersten Hebelarmabschnitt (141) und einen zweiten Hebelarmabschnitt (142) aufweist, wobei während des Betriebes an dem zweiten Hebelarmabschnitt (142) wirkende Fliehkraft größer ist als die an dem ersten Hebelarmabschnitt (141) wirkende Fliehkraft, so dass sich aus den Fliehkräften ein resultierendes Drehmoment an dem Hebelelement (140) ergibt und dadurch das erste Hebelelement (141) mit einer Anpresskraft (F1) auf das Anpressplattenelement (120) drückt.

2. Reibscheibenkupplung (100) nach Anspruch 1, **dadurch gekennzeichnet, dass** der zweite Hebelarmabschnitt (142) ein austauschbares Masseelemente (145) umfasst.

3. Reibscheibenkupplung (100) einem der Ansprüche 1 oder 2 , **dadurch gekennzeichnet, dass** der zweite Hebelarmabschnitt (142) sich zumindest teilweise axial überlappend zu dem Anpressplattenelement (120) befindet.

4. Reibscheibenkupplung (100) nach einem der Ansprüche 1 bis 3, **dadurch gekennzeichnet, dass** die Reibscheibenkupplung eine Anpressplattenrückstellanordnung (200) umfasst, die mit einer Rückstellkraft (F2) auf das Anpressplattenelement (120) drückt, wobei die Rückstellkraft (F2) entgegengerichtet zu der Anpresskraft (F1) ist.

5. Reibscheibenkupplung (100) nach Anspruch 4, **dadurch gekennzeichnet, dass** die Anpressplattenrückstellanordnung (200) ein Federelement (210) umfasst, das sich einerseits mittels eines Bolzenelements (220) an dem Gehäuseelement (110) abstützt und andererseits an dem Anpressplattenelement (120).

6. Reibscheibenkupplung (100) nach Anspruch 5, **dadurch gekennzeichnet, dass** das Bolzenelement (220) an einer Längsseite ein Gewinde (225) umfasst auf dem mittels eines drehbares Einstellelement (230) das Federelement (210) vorgespannt werden kann.

7. Reibscheibenkupplung (100) nach einem der Ansprüche 4 bis 6, **dadurch gekennzeichnet, dass** das Federelement (210) eine Schraubendruckfeder (211) und / oder ein ein Tellerfederelement ist.

8. Reibscheibenkupplung (100) nach einem der Ansprüche 1 bis 6, **dadurch gekennzeichnet, dass** die Reibscheibenkupplung (100) ein Ausrückhebelelement (300) umfasst, das um eine Schwenkachse (350), die quer zur Drehachse A und quer zu einer Radialrichtung der Reibscheibenkupplung verläuft, schwenkbar ist, und das einen ersten Ausrückhebelarmabschnitt (310) und einen zweiten Ausrückhebelarmabschnitt (320) aufweist.

9. Reibscheibenkupplung (100) nach Anspruch 8, **dadurch gekennzeichnet, dass** das Ausrückhebelelement (300) mit einem Ende des ersten Ausrückhebelarmabschnitts (310) in eine Ausnehmung (122) des Anpressplattenelements (120) eingreift.

10. Reibscheibenkupplung (100) nach Anspruch 8 oder 9, **dadurch gekennzeichnet, dass** der zweite Ausrückhebelarmabschnitt (320) sich nach radial innen zur Drehachse A erstreckt.

11. Reibscheibenkupplung (100) nach einem der Ansprüche 8 bis 10, **dadurch gekennzeichnet, dass** eine Länge (L1) des ersten Ausrückhebelarmabschnitt (310) kürzer ist als eine Länge (L2) des zweiten Ausrückhebelarmabschnitts (320).

12. Reibscheibenkupplung (100) nach einem der Ansprüche 8 bis 11, **dadurch gekennzeichnet, dass** eine Ausrückanordnung (400) auf den zweiten Ausrückhebelarmabschnitt (320) mit einer Ausrückkraft (F3) wirkt.

## Claims

1. Friction disc clutch (100) which when not in operation is open when the clutch is not actuated, that is to say is "normally open", comprising
- a housing element (110) which can be rotated about a rotational axis A,
- a pressure plate element (120) which is mounted fixedly on the housing element (110) so as to rotate with it and such that it can be displaced axially,
- at least one friction disc element (130) which is arranged in an axially staggered manner with respect to the pressure plate element (120) and is arranged such that it can be rotated relative to the pressure plate element (120), **characterized in that** the friction disc clutch (100) comprises at least one lever element (140) which corotates during operation of the friction disc clutch (100), can be pivoted about a pivoting axis (150) which runs transversely with respect to the rotational axis A and transversely with respect to a radial direction of the friction disc clutch, and has a first lever arm section (141) and a second lever arm section (142), centrifugal force which acts on the second lever arm section (142) during the operation being greater than the centrifugal force which acts on the first lever arm section (141), such that a resulting torque on the lever element (140) arises from the centrifugal forces and, as a result, presses the first lever element (141) onto the pressure plate element (120) with a pressure force (F1).

2. Friction disc clutch (100) according to Claim 1, **characterized in that** the second lever arm section (142) comprises a replaceable mass element (145).

3. Friction disc clutch (100) according to either of Claims 1 and 2, **characterized in that** the second lever arm section (142) is situated in an at least partially axially overlapping manner with respect to the pressure plate element (120).

4. Friction disc clutch (100) according to one of Claims 1 to 3, **characterized in that** the friction disc clutch comprises a pressure plate restoring arrangement (200) which presses on the pressure plate element (120) with a restoring force (F2), the restoring force (F2) being directed counter to the pressure force (F1).

5. Friction disc clutch (100) according to Claim 4, **characterized in that** the pressure plate restoring arrangement (200) comprises a spring element (210) which is supported on one side by means of a pin element (220) on the housing element (110) and on the other side on the pressure plate element (120).

6. Friction disc clutch (100) according to Claim 5, **characterized in that** the pin element (220) comprises a thread (225) on one longitudinal side, on which thread (225) the spring element (210) can be prestressed by means of a rotatable setting element (230).

7. Friction disc clutch (100) according to one of Claims 4 to 6, **characterized in that** the spring element (210) is a helical compression spring (211) and/or a cup spring element.

8. Friction disc clutch (100) according to one of Claims 1 to 6, **characterized in that** the friction disc clutch (100) comprises a release lever element (300) which can be pivoted about a pivoting axis (350) which runs transversely with respect to the rotational axis A and transversely with respect to a radial direction of the friction disc clutch, and which release lever element (300) has a first release lever arm section (310) and a second release lever arm section (320).

9. Friction disc clutch (100) according to Claim 8, **characterized in that** the release lever element (300) engages with one end of the first release lever arm section (310) into a recess (122) of the pressure plate element (120).

10. Friction disc clutch (100) according to Claim 8 or 9, **characterized in that** the second release lever arm section (320) extends radially inwards to the rotational axis A.

11. Friction disc clutch (100) according to one of Claims 8 to 10, **characterized in that** a length (L1) of the first release lever arm section (310) is shorter than a length (L2) of the second release lever arm section (320).

12. Friction disc clutch (100) according to one of Claims 8 to 11, **characterized in that** a release arrangement (400) acts with a release force (F3) on the second release lever arm section (320).

## Revendications

1. Embrayage (100) à disque de friction ouvert en fonctionnement, lorsque l'embrayage n'est pas actionné, et donc "normalement ouvert", et comprenant :
un élément de boîtier (110) apte à tourner autour d'un axe de rotation A,
un élément (120) à plaque de poussée monté à rotation solidaire avec l'élément de boîtier (110) et à coulissement axial,
au moins un élément (130) à disque de friction disposé en empilement axial par rapport à l'élément (120) à plaque de poussée et disposé de manière à pouvoir tourner par rapport à l'élément (120) à plaque de poussée,
**caractérisé en ce que**
l'embrayage (100) à disque de friction comporte au moins un élément de levier (140) qui tourne conjointement avec l'embrayage (100) à disque de friction lorsque ce dernier est en fonctionnement, qui peut pivoter autour d'un axe de pivotement (150) qui s'étend transversalement par rapport à l'axe de rotation A et transversalement par rapport à une direction radiale de l'embrayage à disque de friction et qui présente une première section (141) de bras de levier et une deuxième section (142) de bras de levier,
la force d'inertie qui agit en fonctionnement sur la deuxième section (142) de bras de levier étant supérieure à la force d'inertie qui agit sur la première section (141) de bras de levier de telle sorte qu'un couple de rotation résultant des forces d'inertie agit sur l'élément de levier (140) et qu'ainsi le premier élément de levier (141) repousse l'élément (120) à plaque de poussée avec une force de poussée (F1).

2. Embrayage (100) à disque de friction selon la revendication 1, **caractérisé en ce que** la deuxième section (142) de bras de levier comporte un élément massique (145) remplaçable.

3. Embrayage (100) à disque de friction selon l'une des revendications 1 ou 2, **caractérisé en ce que** la deuxième section (142) de bras de levier est disposée au moins en partie en superposition axiale par rapport à l'élément (120) à plaque de poussée.

4. Embrayage (100) à disque de friction selon l'une des revendications 1 à 3, **caractérisé en ce que** l'embrayage à disque de friction comporte un ensemble (200) de rappel de plaque de poussée qui repousse l'élément (120) à plaque de poussée par une force de rappel (F2), la force de rappel (F2) étant orientée dans le sens opposé à la force de poussée (F1).

5. Embrayage (100) à disque de friction selon la revendication 4, **caractérisé en ce que** l'ensemble (200) de rappel de plaque de poussée comporte un élément élastique (210) qui s'appuie d'une part sur l'élément de boîtier (110) au moyen d'un élément de goujon (220) et d'autre part sur l'élément (120) à plaque de poussée.

6. Embrayage (100) à disque de friction selon la revendication 5, **caractérisé en ce que** l'élément de goujon (220) comporte un filet (225) sur son côté longitudinal et peut être précontraint sur l'élément élastique (210) au moyen d'un élément rotatif de réglage (230).

7. Embrayage (100) à disque de friction selon l'une des revendications 4 à 6, **caractérisé en ce que** l'élément élastique (210) est un élément (211) à ressort hélicoïdal et/ou un élément à ressort à plateaux.

8. Embrayage (100) à disque de friction selon l'une des revendications 1 à 6, **caractérisé en ce que** l'embrayage (100) à disque de friction comporte un élément (300) de levier de débrayage qui peut pivoter autour d'un axe de pivotement (350) qui s'étend transversalement par rapport à l'axe de rotation A et transversalement par rapport à une direction radiale de l'embrayage à disque de friction, et qui présente une première section (310) de bras de levier de débrayage et une deuxième section (320) de bras de levier de débrayage.

9. Embrayage (100) à disque de friction selon la revendication 8, **caractérisé en ce que** l'élément (300) de levier de débrayage s'engage par une extrémité de la première section (310) de bras de levier de débrayage dans une découpe (122) ménagée dans l'élément (120) à plaque de poussée.

10. Embrayage (100) à disque de friction selon les revendications 8 ou 9, **caractérisé en ce que** la deuxième section (320) de bras de levier de débrayage s'étend radialement vers l'intérieur en direction de l'axe de rotation A.

11. Embrayage (100) à disque de friction selon l'une des revendications 8 à 10, **caractérisé en ce que** la longueur (L1) de la première section (310) de bras de levier de débrayage est plus courte que la longueur (L2) de la deuxième section (320) de bras de levier de débrayage.

12. Embrayage (100) à disque de friction selon l'une des revendications 8 à 11, **caractérisé en ce qu'**un ensemble de débrayage (400) agit par une force de débrayage (F3) sur la deuxième section (320) de bras de levier de débrayage.
